# EUROPÄISCHE PATENTANMELDUNG

(11) **EP 0 951 169 A2**
(43) Veröffentlichungstag der Anmeldung: **20.10.1999**
(21) Anmeldenummer: 99107623.3
(22) Anmeldetag: 16.04.1999
(51) Int. Cl.: H04M 11/02

(54) **Ruf-, Sprech-, und Schaltanlage für die Haustechnik**

(30) Priorität: 18.04.1998 DE 19817238
(71) Anmelder: A. Grothe & Söhne GmbH & Co. KG Signalsysteme und Hauskommunikation, 53773 Hennef (DE)
(72) Erfinder: Böser, Werner, 53909 Zülpich (DE); Mansel, Werner, 54587 Birgel (DE); Meinders, Siemen-Jannes, 26844 Ditzum (DE); Weyel, Armin, 50999 Köln (DE)
(74) Vertreter: Grosse, Dietrich, Dipl.-Ing.

(57) **Zusammenfassung**

Eine Hausrufanlage mit im Bereiche des Hauseinganges angeordnetem Ruf-Tableau sowie einer mindestens ein Türmikrophon und einen Türlautsprecher aufweisenden Türstation, mit einem Netz- und einem Steuergerät sowie einer Anordnung zum Betätigen eines Türöffners, und mit einer Stammleitung zur Verbindung mit gerufenen Wohnungssprechstellen soll so verbessert werden, daß bei einer Beschränkung der Stammleitung auf zwei Adern und beim Montage und Installation erleichternden Verwenden ausschließlich der zweiadrigen Stammleitung die Möglichkeiten der Herstellung zentraler Verbindungen sowie von den einzelnen Sprechstellen ausgehender Verbindungen erweitert werden. Dazu wird vorgeschlagen, daß die Stammleitung über Induktivitäten mit Gleichstrom-Niederspannung gespeist ist, die von den zu speisenden Schaltelementen über Gleichrichter und Induktivitäten abnehmbar ist, daß Schaltwege von Ruftastern des Tableaus vermittels von Code-Konvertern in dem DTMF-System zugehörige Signale umgesetzt und der Stammleitung zugeführt sind, und daß die Wohnungssprechstellen mit DTMF-Empfängern ausgestattet sind und deren Ausgang auf Vergleicher geführt ist, welche beim Empfang des vorgegebenen Adreßsignales der Wohnungssprechstelle ein Rufsignal weitergeben und mindestens einen Schaltweg des Handapparates der Wohungssprechstelle vorbereiten.

## Beschreibung

Die Erfindung betrifft eine Hausrufanlage mit im Bereiche des Hauseinganges angeordnetem Ruf-Tableau sowie einer mindestens ein Türmikrophon und einen Türlautsprecher aufweisenden Türstation, mit einem Netz- und einem Steuergerät sowie einer Anordnung zum Betätigen eines Türöffners, und mit einer Stammleitung zur Verbindung mit gerufenen Wohnungssprechstellen.

Früher bekannte Anlagen erforderten einen erheblichen Installations- und Montageaufwand, da zur Verbindung der Wohnungssprechstellen zwar zwei Adern genügten, jedoch zur Zuführung der Betriebsspannung, zum Auslösen eines Türöffners, zur Sperrung nicht gerufener und Entsperrung der gerufenen Wohnungssprechstelle weitere, zusätzliche Leitungen erforderlich wurden. Einen erheblichen zusätzlichen Aufwand erforderten die für das Rufen benutzten, von den Ruftasten des bzw. der Tableaus ausgehenden Rufleitungen. Als nachteilig hat sich bei einer bspw. aus der WO 92/13418 bekannten Anlage bei einer Reduzierung der Stammleitung auf einen zweiadrigen Bus ergeben, daß die Anwahl des gewünschten Endgerätes Schwierigkeiten bereiten kann und insbesondere die Aktivierung eines gewählten Gerätes von einem Endgerät aus praktisch nicht möglich ist.

Die Erfindung geht daher von der Aufgabe aus, bei einer Beschränkung der Stammleitung auf zwei Adern und beim Montage und Installation erleichternden Verwenden ausschließlich der zweiadrigen Stammleitung die Möglichkeiten der Herstellung zentraler Verbindungen sowie von den einzelnen Sprechstellen ausgehender Verbindungen zu erweitern.

Gelöst wird die gestellte Aufgabe durch die Merkmale des Patentanspruches 1. Es wird nur eine leicht installierbare zweiadrige Leitung benötigt, die zur Abwicklung des Gegensprechens verwendet wird, die gleichzeitig die jeweilig benötigte Stromversorgung bewirkt, und die ein einfaches Anwählen mit bekannten, in der Telephontechnik viel verwendeten Schaltkreisen ebenso erlaubt wie das bewußte Auslösen von Sondersignalen, bspw. zur Betätigung eines Türöffners.

Vorteilhafte, zweckmäßige und auch erfinderische Weiterbildungen der Erfindung sind in den Unteransprüchen gekennzeichnet. Erläutert ist die Erfindung anhand der Beschreibung eines in Zeichnungen dargestellten Ausführungsbeispieles. Es zeigen hierbei
- Figur 1: schematisch die zweiadrige Stammleitung mit an sie angeschlossenen Schalteinheiten,
- Figur 2: ein Steuergerät mit einer Ergänzung durch besondere Schaltkanäle,
- Figur 3: eine Anordnung für durch Ruftaster auslösbare, auf die Stammleitung gegebene Wählsignale,
- Figur 4: ein Schaltbeispiel für eine über die Stammleitung betreibbare Türstation,
- Figur 5: die einzelnen Bauteile einer Wohnungssprechstelle, und
- Fign. 6 und 7: erläutern einen weiteren Ausbau für weitere Türstationen und weitere Wohnungssprechstellen.

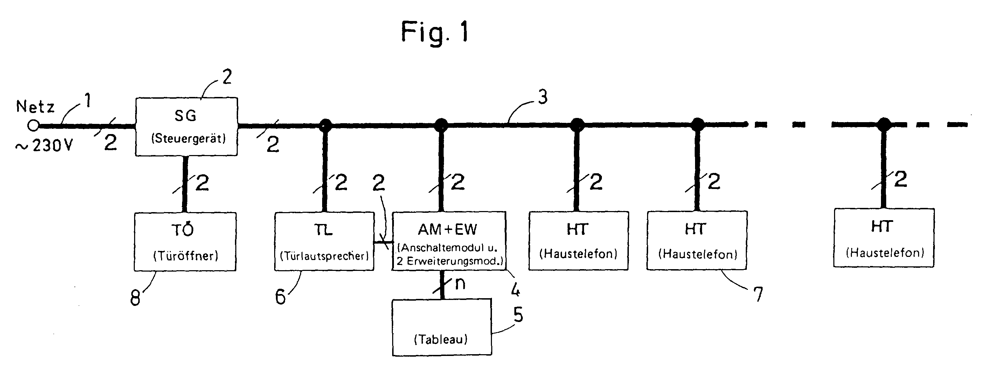

Die schematische Aufbau einer der Erfindung entsprechenden Anlage ist im Blockschaltbild der Fig. 1 dargestellt. Vom 50 Hz-Netz 1 wird das Netzgerät 2 betrieben, welches die beiden Adern der Stammleitung 3 mit einer geregelten Gleichstrom-Niederspannung, im Ausführungsbeispiel 19,5 V, beaufschlagt. Mit der Stammleitung 3 verbunden ist das von den Ruftasten des Tableaus 5 gesteuerte Anschaltemodul 4, und ebenso betrieben wird die Türlautsprecher und Türmikrophon aufweisende Türstation 6. Entlang der Stammleitung 3 ist dann eine Vielzahl von Wohnungssprechstellen 7 mit ihr verbunden, und mit dem Netzgerät 2 ist ein Türöffner 8 verbunden.

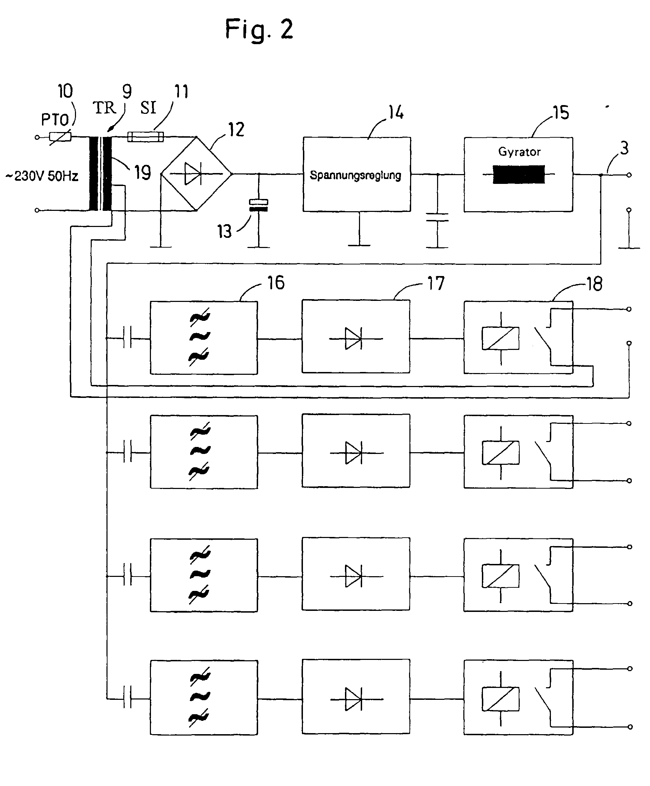

Ein Blockschaltbild des Steuergerätes ist in Fig. 2 dargestellt. Der Primärkreis eines Netztrafos 9 ist durch einen PTC-Widerstand 10 abgesichert, der im Falle von unzulässigem Überstrom durch seine Erwärmung den zusätzlichen Widerstand im Primärkreis erhöht und damit den unzulässigen Primärstrom absenkt. Eine reversible Sicherung 11 ist im Sekundärkreis vorgesehen, der einen Grätz-Gleichrichter 12 speist. Die am Ladekondensator 13 sich aufbauende Gleichspannung wird durch den Spannungsregler 14 auf bspw. 19,5 Volt abgesenkt. Die nochmals gesiebte Spannung wird über einen Gyrator 15 auf die Stammleitung 3 gegeben. Damit ist eine sichere Speisung gewährleistet, während gleichzeitig über die Stammleitung übertragene Signale vom Netzgerät abgehalten werden, so daß dessen Kondensatoren und Spannungsregler diese Signale nicht kurzschließen können. Gleichzeitig sind vier weitere Steuerkreise gezeigt, die aus selektiven, auf bestimmte Frequenzen abgestimmten Empfängern 16 bestehen, die kapazitiv an die Stammleitung angekoppelt sind und beim Ansprechen über Verstärker- und/oder Gleichrichterkreise 17 Relais 18 zum Ansprechen bringen. Im Ausführungsbeispiel sind vier solcher selektiven Empfänger 16 vorgesehen, die auf Frequenzen zwischen 18 und 58 kHz ansprechen. Der erste wird zum Türöffnen verwendet, indem der Kontakt des Relais 18 eine Teil-Sekundärwicklung 19 des Netztrafos 9 an Klemmen legt, an die ein Türöffner anschließbar bzw. nach Fig. 1 angeschlossen ist. Die weiteren drei selektiven Empfänger mit nachgeordneten Relais lassen sich für beliebige weitere Sonderfunktionen einsetzen.

Das eigentliche Anrufen erfolgt durch Ruftaster 20 des Tableaus 5.

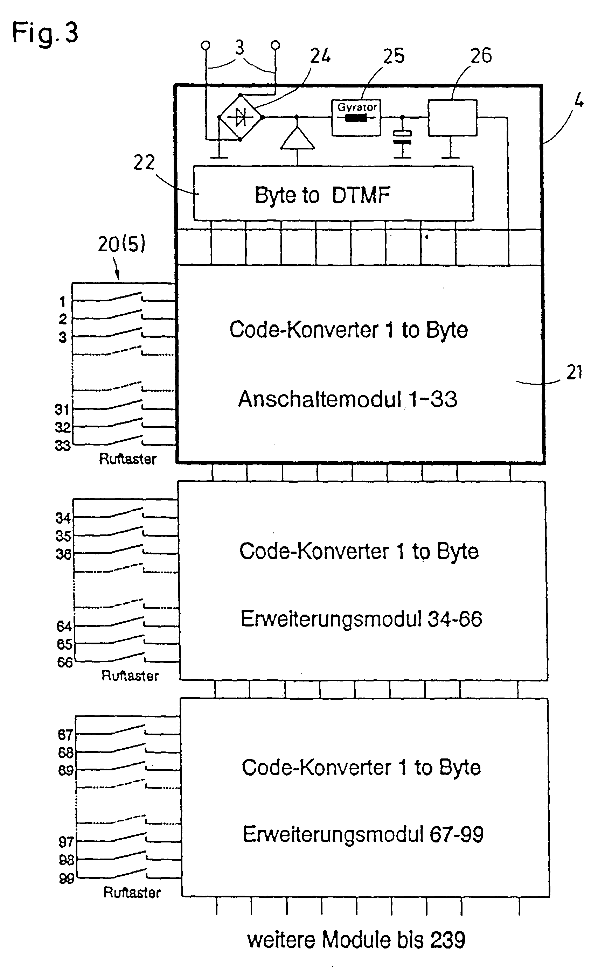

Um nicht die jeweiligen, von diesen Ruftastern 20 ausgehenden Rufleitungen verkabeln zu müssen, erfolgt eine im Ausführungsbeispiel zweistufige Codierung. Ein erster Code-Konverter 21 setzt das Signal des betätigten der aufgeschalteten dreiunddreißig Ruftasten 20 in ein binäres Codewort, in ein Byte, um, und dieses wird auf einen zweiten Code-Konverter 22 weitergegeben, der hieraus die in der Fernsprechtechnik verbreitet benutzten DTMF-Signale auslöst. Diese DTMF-Signale bestehen aus zwei mal vier unterschiedlichen Tonfrequenzen, die über ein Koppelglied einem Gleichrichter 24 zuführbar sind, welcher als Anschluß der Stammleitung 3 vorgesehen ist. Gleichzeitig dient die Stammleitung der Stromversorgung des schematisch in Fig. 3 gezeigten Anschaltemoduls 4: Der Stammleitung 3 wird die von ihr geführte Gleichspannung entnommen und über den Gleichrichter 24 ungeachtet der Polung beim Anschließen stets in richtiger Polarität weitergegeben. Auch hier ist ein Gyrator 25, eine elektronische Induktivität, angeordnet, um die Stammleitung 3 niederfrequenzmäßig von dem folgenden Siebkondensator und dem Spannungsregler 26 zu entkoppeln und diese als Belastung der Stammleitung 3 auszuschließen. Der Spannungsregler 26 dient weiterhin dazu, die von der Stammleitung übermittelte Spannung von bspw. 20 Volt Gleichspannung auf eine Betriebsspannung der gespeisten Elemente von 5 Volt zu reduzieren. Diese Betriebsspannung wird den Code-Konvertern 21 und 22 sowie den Generatoren für die DTMF-Kennung übermittelt. Das bedeutet, daß beim Drücken einer der Ruftasten 20 des Tableaus 5 die Code-Konverter 21, 22 tätig werden und die gesuchte der Wohnungssprechstellen 7 über DTMF mittels der Stammleitung 3 anwählen.

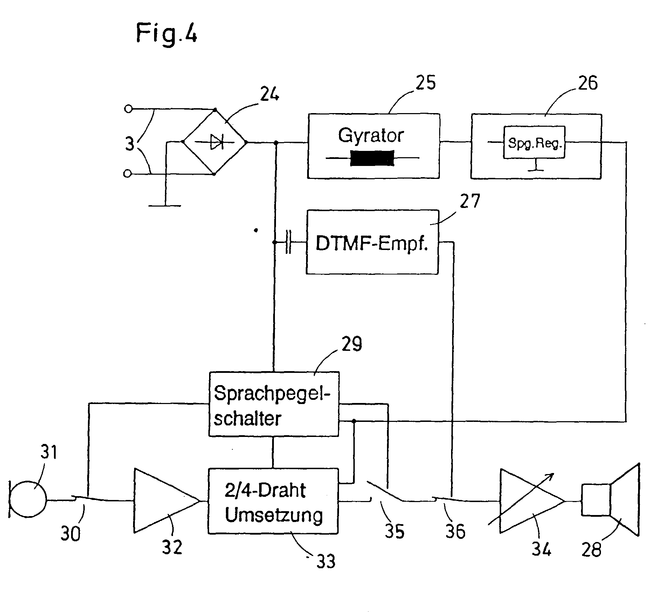

Schematisch ist die Bestückung der Türstation 6 der Fig. 1 als Blockschaltbild in Fig. 4 dargestellt. Auch hier ist die Stammleitung 3 zur Gewinnung der Betriebsspannung über einen Gleichrichter 24 und einen Gyrator 25 auf einen Spannungsregler 26 geführt, dessen Ausgang die einzelnen Baugruppen speist.

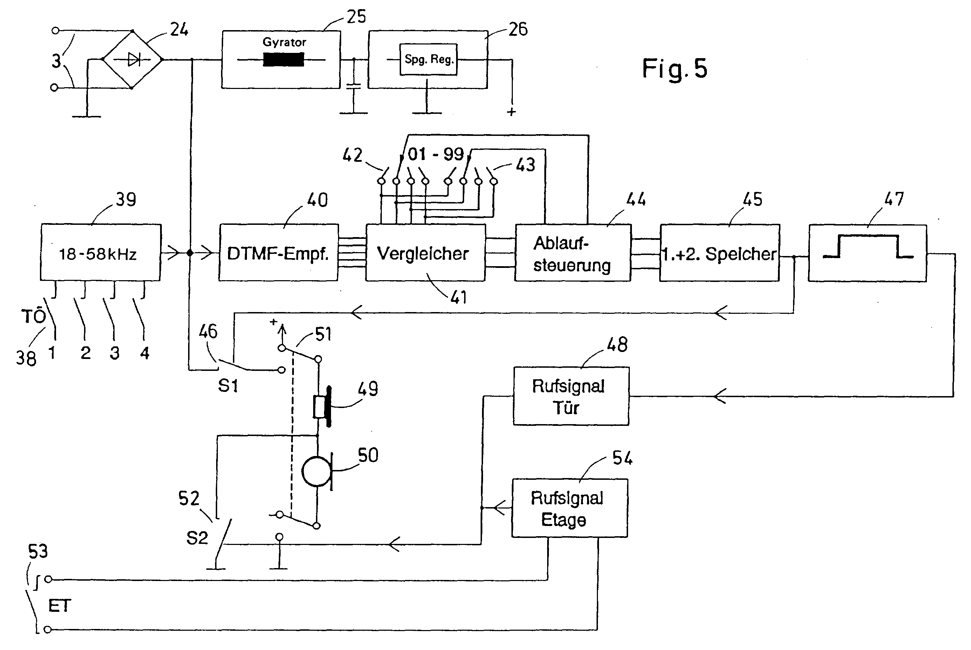

Über den Gleichrichter 24 ist kapazitiv ein DTMF-Empfänger 27 an die Stammleitung 3 angekoppelt. Stellt dieser Empfänger 27 ein DTMF-Signal, vorzugsweise ein gültiges DTMF-Signal, auf der Stammleitung 3 fest, so unterbricht er mittels eines schaltbaren Kontaktes 36 die Zuleitung zum Türlautsprecher 28, so daß dieser also während einer Wahl still bleibt. Der Sprachpegelschalter 29 ist so ausgebildet, daß, wie dargestellt, in der Ausgangsstellung nach Anwählen einer Wohnungssprechstelle 7 der Fign. 1 und 5 der Mikrophonschalter 30 geschlossen ist und damit das Türmikrophon 31 über diesen Schalter 30 mit dem Mikrophonverstärker 32 verbunden ist und über die 4/2-Drahtumsetzung 33 sowie den Sprachpegelschalter 29 und den Gleichrichter 24 mit der Stammleitung 3 verbunden ist. Der zum Endverstärker 34 des Türlautsprechers 28 führende Schalter 35 bleibt zunächst geöffnet. Damit wird während der eigentlichen Wahl durch Öffnen des Kontaktes 36 mittels des DTMF-Empfängers 27 dieser Wahlvorgang unhörbar, und nach Abschluß der Wahl schließt der Kontakt 36 zwar, Schalter 35 bleibt aber geöffnet, so daß nach Herstellung der Verbindung von der Türstation aus über das Türmikrophon 31 gesprochen werden kann. Sobald jedoch der angewählte Teilnehmer spricht und die von ihm bewirkte und über die Stammleitung 3 übertragene Niederfrequenz die Sprachschwelle des Sprachpegelschalters 29 überschreitet, so schaltet diese Sprachsteuerung um und sperrt durch Öffnen des Mikrophonkontaktes 30 das Türmikrophon 31, während durch Schließen des Schalters 35 der Lautsprecher 28 wirksam gemacht wird. Ist die Meldung des angerufenen Teilnehmers beendet, so wird die Sprachrichtung durch Schließen des Mikrophonschalters 30 und Öffnen des Schalters 35 umgekehrt: Nunmehr kann der an der Türstation Stehende sprechen und der angerufene Teilnehmer hört. Diese Umschaltung wird, um ein Ende der gesprochenen Mitteilung des angewählten Teilnehmers sicher zu erfassen, nach Unterschreiten der Sprachschwelle des Sprachpegelschalters 29 mit einer gewissen Verzögerung bewirkt, die zweckmäßig mindestens eine Silbenlänge beträgt.

Der 2/4-Draht-Umsetzer 33 entkoppelt den Mikrophonverstärker 32 vom Lautsprecherverstärker 34 und ermöglicht daher mit der Sprachsteuerung eine beliebige Lautstärke an der Türstation, ohne daß eine Rückkopplung zu befürchten ist.

Anhand der Fig. 5 werden nun grundsätzlicher Aufbau sowie die Wirkungsweise einer Wohnungssprechstelle 7 der Fig. 1 erläutert. Auch hier erfolgt der Anschluß an die Stammleitung 3 verpolungssicher über einen Gleichrichter 24, und gleichzeitig wird durch einen Gyrator 25 die Ableitung von Signalfrequenzen bspw. über den dem Gyrator folgenden Siebkondensator oder den Spannungsregler 26 unterbunden. Hier ist beim Spannungsregler nur kurz der Ausgang gezeigt, die Weiterführung der Leitung zu den einzelnen Bauelementen ist nur beim Gabelschalter angedeutet. Bewährt hat sich wieder bei einer Gleichspannung von 20 Volt auf der Stammleitung 3 eine Reduzierung dieser Spannung im Spannungsregler 26 auf bspw. 5 Volt.

Sondersignale, bspw. eines zur Betätigung eines Türöffners, werden vermittels besonderer Taster 38 über einen Tonfrequenzgenerator 39 ausgelöst, der von ihm bewirkte Signale direkt auf die Gleichspannungsseite des Gleichrichters 24 gibt. Will also bspw. am Ende eines Gespräches der angerufene Teilnehmer den Türöffner betätigen, so drückt er den Taster 38 "1" und bewirkt damit im Frequenzgenerator 39 einen Frequenzzug zwischen 18 und 58 kHz, der den entsprechenden selektiven Empfänger 16 der Figur 2 und damit das diesem nachgeordnete Relais 18 und damit den Türöffner 8 betätigt.

Direkt an den Ausgang des Gleichrichters 24 und damit auch an die Stammleitung ist der DTMF-Empfänger 40 gekoppelt, dessen Ausgangssignale im Vergleicher 41 mit der in Kontaktgruppen 42, 43 eingestellten Adresse verglichen werden. Hierbei werden zwei Kontaktgruppen 42, 43 zur Bezeichnung der jeweiligen Wohnungssprechstelle verwendet. Der DTMF-Empfänger 40 decodiert daher das erste der übertragenen DTMF-Signale, und der Vergleicher 41 überprüft die Übereinstimmung und auch die Abweichung der empfangenen Signale von der Einstellung der Kontaktgruppe 42. Das Ergebnis wird weiterhin über eine Ablaufsteuerung 44 in den ersten Teil eines Speichers 45 übertragen. Nach entsprechendem Zeitablauf wird die zweite Signalfolge durchgegeben. Bei dem nun folgenden decodierten zweiten DTMF-Signal erfolgt die Überprüfung anhand der entsprechend der zweiten Hälfte der Adresse eingestellten Kontaktgruppe 43, und die Ergebnisse werden bei Gleichheit in den zweiten Teil des Speichers 45 übernommen. Bei völliger Übereinstimmung beider DTMF-Signale mit den an den Kontaktgruppen 42, 43 eingestellten Signalen wird über den Schalter 46 die Mithörsperre aktiviert. Gleichzeitig wird über das Element "Rufsignaldauer" 47 der Rufsignalgenerator 48 betätigt, der bspw. die Hörerkapsel 49 mit einem Rufsignal beaufschlagt, das auch von einem Gongsignal-Generator genommen sein kann.

Im Handapparat sind in Serie geschaltet die Hörerkapsel 49 sowie das Mikrophon 50 angeordnet. Der durch Abheben des Handapparates betätigbare Gabelschalter 51 ist in seiner durch Auflegen des Handapparates bestimmten Ruhestellung gezeigt, in der die Hörerkapsel 49 die Spannung des Spannungsreglers 26 erhält, das Mikrophon nicht eingeschaltet ist, und die Verbindungsleitung zwischen Hörerkapsel 49 und Mikrophon 50 über einen Arbeitskontakt 52 an Masse legbar ist. Während der Wirksamkeit des Schaltelementes 47 "Rufsignaldauer" wird mittels des Schaltelementes 48 "Rufsignal Tür" der Arbeitskontakt 52 entsprechend intermittierend betätigt, so daß die Hörerkapsel 49 entsprechend beaufschlagt wird und der gerufene Wohnungsinhaber den Türruf zu bemerken vermag. Nimmt er daraufhin den Handapparat zum Gespräche hoch, so schaltet der Gabelschalter 51 um und legt das eine Ende der Hörerkapsel 49 über den geschlossenen Schalter 46 an den einen Pol des Gleichrichters 24, während der äußere Pol des Mikrophones 50 an Masse und damit an den zweiten Pol des Gleichrichters 24 geschaltet wird. Damit ist die Reihenschaltung von Hörerkapsel 49 und Mikrophon 50 an die Stammleitung 3 gelegt, und der gerufene Teilnehmer kann sowohl sprechen als auch hören; eine Umschaltung wird nur in der Türstation 6 (Fig. 4) vorgenommen. Darüber hinaus besteht aber auch die Möglichkeit, daß ein Etagentaster 53 vorgesehen ist; bei seiner Betätigung wird das Bauelement 54 "Rufsignal Etage" wirksam gemacht, das ebenfalls den Arbeitskontakt 52 zu betätigen vermag. Zweckmäßig werden für Tür und Etage bzw. Wohnungstür unterschiedliche Signalfolgen verwendet, um dem Gerufenen anzuzeigen, ob er die Wohnungstür zu öffnen hat oder mit der Türstation sprechen kann. Es besteht auch durchaus die Möglichkeit, zum Rufen Gongsignalgeber einzusetzen, wobei auch hier durch unterschiedliche Gongtöne oder Gongton und Vibrationsschalter der Ort des Rufes erkennbar gemacht werden kann.

Nach positiver Abfrage der Türstation kann durch Betätigen des Tasters 38, der im übrigen zu jeder Zeit betätigbar ist, die Haustür geöffnet werden.

Mit den geschilderten Bauelementen lassen sich bereits recht große Anlagen aufbauen, wobei gegebenenfalls im Rahmen der Stammleitung 3 zusätzliche Verstärker angeordnet sein können. Nach Fig. 3 konnten zusammen mit dem Code-Konverter 21 dreiunddreißig Ruftaster 20 für dreiunddreißig Wohnungen verwendet werden. Durch Verwendung weiterer Code-Konverter, von denen in Fig. 3 bereits zwei dargestellt sind, läßt sich die erfindungsgemäße Anlage um jeweils dreiunddreißig Wohnungssprechstellen erweitern. Nach Fig. 3 ist eine solche Erweiterung von dreiunddreißig zu rufenden Wohnungen auf neunundneunzig vorgenommen worden, d.h. von binär dreiunddreißig ist auf binär neunundneunzig erweitert. Durch den Anschluß weiterer Code-Konverter könnte bis binär zweihundertneununddreißig ohne weiteres erweitert werden.

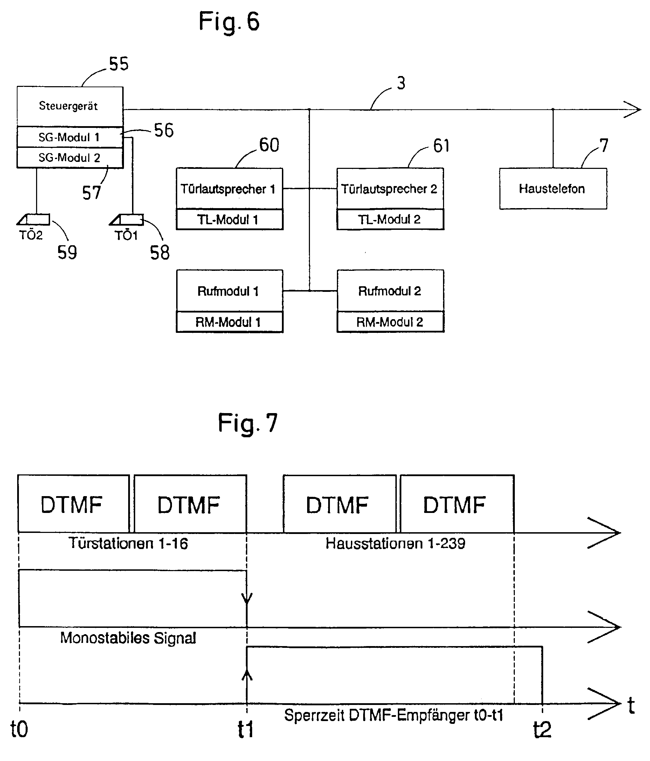

Es ist aber auch möglich, nicht nur die Anzahl der Wohnungssprechstellen, sondern auch die der Türstationen zu erhöhen. Nach Fig. 6 ist eine solche Erweiterung auf zwei Türstationen ersichtlich. Die binären Adressen 240 bis 255 sind für die Steuerung von mehreren Türstationen vorgesehen. Hier ist das Netzgerät 55 mit zwei NG-Modulen 56 und 57 ausgestattet, die auf Türöffner 58 und 59 wirken. Die Türstationen sind mit entsprechenden Rufmodulen ausgestattet. Nach Fig. 7 wird für die Zeit t₀ bis t₁ ein Signal erzeugt, an dessen abfallender Rückflanke ein weiteres monostabiles Signal erzeugt wird, welches etwas länger als das folgende doppelte DTMF-Signal (HT 1-239) ist und die Empfänger (240-255) sperrt, um ein Löschen durch das zweite DTMF-Paket zu verhindern. Sowohl bei dergleichen komplexen, ausgeweiteten Anlagen als auch bei kleineren Anlagen hat es sich in jedem Falle bewährt, sowohl Installations- als auch Montagearbeiten zu minimieren und derart zu vereinfachen, daß zumindest keine besonderen Kenntnisse zum Aufstellen und Einrichten der Anlagen erforderlich sind.

## Patentansprüche

1. Hausrufanlage mit im Bereiche des Hauseinganges angeordnetem Ruf-Tableau sowie einer mindestens ein Türmikrophon und einen Türlautsprecher aufweisenden Türstation, mit einem Netz- und einem Steuergerät sowie einer Anordnung zum Betätigen eines Türöffners, und mit einer Stammleitung zur Verbindung mit gerufenen Wohnungssprechstellen,
**dadurch gekennzeichnet**,
daß die Stammleitung (3) über Induktivitäten (Gyrator 15) mit Gleichstrom-Niederspannung gespeist ist, die von den zu speisenden Schaltelementen über Gleichrichter (24) und Induktivitäten (Gyrator 25) abnehmbar ist,
daß Schaltwege von Ruftastern (20) des Tableaus (5) vermittels von Code-Konvertern (20, 21) in dem DTMF-System zugehörige Signale umgesetzt und der Stammleitung (3) zugeführt sind, und daß die Wohnungssprechstellen (7) mit DTMF-Empfängern (40) ausgestattet sind und deren Ausgang auf Vergleicher (44) geführt ist, welche beim Empfang des vorgegebenen Adreßsignales der Wohnungssprechstelle ein Rufsignal weitergeben und mindestens einen Schaltweg des Handapparates der Wohungssprechstelle vorbereiten.

2. Hausrufanlage nach Anspruch 1,
**dadurch gekennzeichnet**,
daß die Schaltwege der Ruftaster (20) des Tableaus (5) auf einen Digital-Umsetzer (21)(Code-Konverter 1 to Byte) führen und die von diesem abgegebenen Signale einen DTMF-Umsetzer (22) (Code-Konverter Byte to DTMF) zur Weitergabe gerufener Adressen zu aktivieren.

3. Hausrufanlage nach Anspruch 1 oder 2,
**dadurch gekennzeichnet**,
daß Adressen mit einer zweifachen Serie von DTMF-Signalen bezeichnet sind und daß das Vergleichen empfangener DTMF-Signale in Wohnungssprechstellen (7) zwei Signalserien umfaßt.

4. Hausrufanlage nach mindestens einem der Ansprüche 1 bis 3,
**dadurch gekennzeichnet**,
daß die Türstation (6) einen DTMF-Empfänger (27) aufweist, der beim Empfang vorzugsweise eines als Adresse benutzten DTMF-Signales für die Übertragungsdauer des Wählsignales den Türlautsprecher (28) abschaltet (Kontakt 36).

5. Hausrufanlage nach mindestens einem der Ansprüche 1 bis 4,
**dadurch gekennzeichnet**,
daß auf den Empfang des zugeordneten Adress-Signales die Hörerkapsel (49)/Mikrophon (50) eingeschaltet (Schalter 46) werden und über ein Zeitglied (Rufsignaldauer 47) ein Rufsignal mit durch das Zeitglied bestimmter Dauer ausgelöst wird.

6. Hausrufanlage nach mindestens einem der Ansprüche 1 bis 5,
**gekennzeichnet durch**
eine durch das Überschreiten einer Sprechschwelle durch die gerufene Wohnungssprechstelle (7) gesteuerte Wirksamkeit des Türlautsprechers (28).

7. Hausrufanlage nach Anspruch 6,
**dadurch gekennzeichnet**,
daß die Wirksamkeit von Türmikrophon (31) und Türlautsprecher (28) invers gesteuert werden.

8. Hausrufanlage nach mindestens einem der Ansprüche 1 bis 7,
**dadurch gekennzeichnet**,
daß das Türmikrophon (51) und der Türlautsprecher (28) über eine 2/4-Drahtumsetzung (33) mit der Stammleitung (3) gekoppelt sind.

9. Hausrufanlage nach mindestens einem der Ansprüche 1 bis 8,
**dadurch gekennzeichnet**,
daß die Wohnungssprechstellen (7) mit wählbar einschaltbaren (Taster 38), mit der Stammleitung (3) gekoppelten Tonfrequenzgeneratoren (39) ausgestattet sind, und daß das Netzgerät (2) oder die Türstation (6) über Sonderfunktionen auslösende, zugeordnete Empfänger (16) verfügen.

10. Hausrufanlage nach Anspruch 9,
**dadurch gekennzeichnet**,
daß ein Empfängern (16) zugeordnetes Relais (18) Türöffner (8) betätigt.

11. Hausrufanlage nach mindestens einem der Ansprüche 9 oder 10,
**dadurch gekennzeichnet**,
durch eine im Bereich von 18 bis 22 kHz liegende Übertragungsfrequenz.
